# EUROPÄISCHE PATENTSCHRIFT

(11) **EP 4 078 314 B1**
(45) Veröffentlichungstag und Bekanntmachung des Hinweises auf die Patenterteilung: **04.03.2026**
(21) Anmeldenummer: 20833840.0
(22) Anmeldetag: 17.12.2020
(51) Int. Cl.: G05B 23/02, G06F 21/85, G06F 21/44

(54) **VORRICHTUNG MIT EINER SCHNITTSTELLE UND VERFAHREN ZUM BETREIBEN EINER VORRICHTUNG MIT EINER SCHNITTSTELLE**
DEVICE WITH AN INTERFACE AND METHOD OF OPERATING A DEVICE WITH AN INTERFACE
DISPOSITIF AVEC UNE INTERFACE ET PROCEDE DE FONCTIONNEMENT D'UN DISPOSITIF AVEC UNE INTERFACE

(30) Priorität: 20.12.2019 DE 102019220362; 16.12.2020 DE 102020216048
(43) Veröffentlichungstag der Anmeldung: 26.10.2022
(73) Patentinhaber: Robert Bosch GmbH, 70442 Stuttgart (DE)
(72) Erfinder: JAUSS, Manuel, 73550 Wissgoldingen (DE); LOTHSPEICH, Timo, 71287 Weissach (DE); KARTAL, Mustafa, 71272 Renningen (DE)
(86) Internationale Anmeldenummer: PCT/EP2020/086828
(87) Internationale Veröffentlichungsnummer: WO 2021/123024

(56) Entgegenhaltungen:
- EP-A1- 3 401 183
- EP-B1- 3 401 183
- DE-A1- 102017 206 559
- US-A1- 2015 191 151

## Beschreibung

### Stand der Technik

Die Offenbarung betrifft ein Verfahren zum Betreiben einer Vorrichtung, die eine Schnittstelle zum Datenaustausch mit einer externen Einheit aufweist.

Die Offenbarung betrifft ferner eine Vorrichtung mit einer Schnittstelle zum Datenaustausch mit einer externen Einheit.

Aus der DE 102010008816 A1 ist bereits ein Verfahren zur Online-Kommunikation bekannt. In Abhängigkeit eines ermittelten Sicherheitsstatus wird der Zugang zum drahtlosen Datenverkehrsnetz geregelt.

Aus der EP 3401183 A1 ist ein Verarbeitungssystem bekannt. Das Verarbeitungssystem umfasst mindestens einen Hardwareblock, der in Abhängigkeit von Konfigurationsdaten, einem nichtflüchtigen Speicher mit den Konfigurationsdaten für den mindestens einen Hardwareblock konfiguriert ist, um den Betrieb zu ändern, und Konfigurationsmittel zum Lesen der Konfigurationsdaten aus dem nichtflüchtigen Speicher und zum Bereitstellen der aus dem nichtflüchtigen Speicher gelesenen Konfigurationsdaten an den mindestens einen Hardwareblock. Aus der US 2015/0191151 A1 ist eine Sicherheitseinrichtung zur Kommunikation zu einem Kommunikationsnetzwerk in einem Kraftfahrzeug bekannt.

### Offenbarung der Erfindung

Das Verfahren gemäß den Merkmalen des unabhängigen Anspruchs hat demgegenüber den Vorteil, dass abhängig von unterschiedlichen Einsatzbereichen der Vorrichtung gestufte Sicherheitskonzepte genau abgestimmt an die unterschiedlichen Nutzungsphasen realisiert werden können, sodass sich die Sicherheit gegen Manipulationen erhöht. Insbesondere die Aktivierung der Schnittstelle und die Möglichkeit hierüber ein Computerprogramm, nämlich eine Prüfsoftware aufzuspielen, ist unter Verwendung der Zustandsvariablen an die jeweiligen Situationen anzupassen.

Gerade in unterschiedlichen Nutzungsphasen ist die Vorrichtung unterschiedlichen Manipulationsmöglichkeiten ausgesetzt. In der Produktionsphase sind diese eher eingeschränkt. Zur Überprüfung der Vorrichtung insbesondere am Bandende nach erfolgter Produktion muss die Prüfsoftware besonders schnell aufgespielt werden können. Dies wird erfindungsgemäß erreicht, indem in der ersten Nutzungsphase eine Ausführung und/oder Übertragung des Computerprogramms ohne Authentisierung freigegeben wird.

Erfindungsgemäß wird in der weiteren Nutzungsphase der Feldphase eine Ausführung und/oder Übertragung des Computerprogramms nicht freigegeben. Die Vorrichtung befindet sich beispielsweise in Form eines Steuergeräts nun im laufenden Betrieb in einem Fahrzeug und ist dort somit zahlreichen Manipulationsversuchen ausgesetzt.

Erfindungsgemäß wird zwischen dem ersten Wert der Zustandsvariablen und dem weiteren Wert der Zustandsvariablen ein optionaler zweiter Wert der Zustandsvariablen einer weiteren Nutzungsphase, der Lagerphase, zugeordnet, wobei in der weiteren Nutzungsphase eine Ausführung und/oder Übertragung des Computerprogramms nur nach Authentisierung freigegeben wird. Damit wird der Situation einer gegenüber der Produktionsphase erhöhten Manipulationsmöglichkeit Rechnung getragen.

In einer Alternative ist ein noch weiterer Wert der Zustandsvariablen einer noch weiteren Nutzungsphase, nämlich Rückläuferphase und/oder Analysephase, der Vorrichtung zugeordnet, wobei in der noch weiteren Nutzungsphase der Vorrichtung eine Ausführung und/oder Übertragung des Computerprogramms nur nach Authentisierung, insbesondere über eine weitere Einrichtung wie ein Backend oder Trust Center, freigegeben wird. Gerade durch ein gestuftes Sicherheitskonzept mit unterschiedlichen Sicherheitsanforderungen in den jeweiligen Nutzungsphasen können weitere Angriffe reduziert werden. Erfindungsgemäß ist die Vorrichtung ein Steuergerät (Electronic Control Unit, ECU) für ein Kraftfahrzeug, beispielsweise für eine Brennkraftmaschine eines Kraftfahrzeugs.

In einer zweckmäßigen Weiterbildung weist die Vorrichtung wenigstens 3. insbesondere 4 oder 5 verschiedene Nutzungsphasen auf, wobei eine jeweilige Nutzungsphase insbesondere durch eine jeweilige Sicherheitsanforderung charakterisiert ist, und insbesondere wenigstens ein erster Wert der Zustandsvariable einer ersten Nutzungsphaseder Produktionsphase, zugeordnet ist und wenigstens ein weiterer, insbesondere zweiter, Wert einer weiteren, insbesondere einer zweiten, Nutzungsphaseder Feldphase, der Vorrichtung zugeordnet ist, wobei die weitere Nutzungsphase der Vorrichtung durch eine hohe Sicherheitsanforderung charakterisiert ist.

Dadurch, dass in einer zweckmäßigen Weiterbildung der Wert der Zustandsvariablen inkrementell und/oder irreversibel geändert werden kann, werden Manipulationsmöglichkeiten weiter erschwert.

Um die Sicherheit zu erhöhen, ist in einer zweckmäßigen Weiterbildung eine Deaktivierung der Schnittstelle in der Feldphase vorgesehen. Besonders zweckmäßig ist eine weitere Diagnoseschnittstelle aktiv, über die neben üblichen Diagnosefunktionen in der Werkstatt gegebenenfalls eine Reaktivierung der Schnittstelle unter hohen Sicherheitsanforderungen eingeleitet werden kann.

Bei weiteren bevorzugten Ausführungsformen ist das Computerprogramm vorteilhafterweise dazu ausgebildet ist, Operationen, insbesondere systemnahe Operationen, insbesondere eine Hardware-Prüfung, insbesondere Hardware-Endprüfung, der Vorrichtung, und/oder eine Bedatung der Vorrichtung, insbesondere Übertragen von wenigstens einer Funktion und/oder wenigstens einer Konfiguration, auszuführen. Beispielsweise kann das Computerprogramm auch zum Ausführen einer Aktivierungssoftware, insbesondere eine Function-on-Demand Aktivierungssoftware zum Freischalten von Funktionen der Vorrichtung, ausgebildet sein. Gemäß weiteren Ausführungsformen kann das Computerprogramm auch die Aktivierungssoftware oder Teile davon umfassen.

Bei weiteren bevorzugten Ausführungsformen ist die zweite Speichereinrichtung eine Speichereinrichtung zum flüchtigen Speichern des wenigstens einen, insbesondere durch die Vorrichtung ausführbaren, Computerprogramms. Bei weiteren bevorzugten Ausführungsformen ist die zweite Speichereinrichtung ein Arbeitsspeicher, RAM, random access memory. Gerade durch das Laden des Computerprogramms in den RAM verbleibt die Software nicht dauerhaft in der Vorrichtung, da nach Durchführung eines Hardware/Power-off Resets die Software aufgrund des charakteristischen Verhaltens von flüchtigen Speichern automatisch aus dem RAM gelöscht wird. Auf ein Abspeichern in den dauerhaften Speicher kann verzichtet werden. Eine Reservierung und damit Verschwendung von Speicher für das Computerprogramm erfolgt nicht. Der entsprechende Speicherbereich kann im Normalbetrieb für andere Funktionalitäten verwendet werden. Somit kann das Verfahren sowohl für Vorrichtungen mit großem oder aber auch kleinem nichtflüchtigen Speicher verwendet werden.

Bei weiteren bevorzugten Ausführungsformen ist die erste Speichereinrichtung beispielsweise ein Flash-Speicher, z.B. Flash-EEPROM bzw. NOR-Flash oder NAND-Flash, oder ein nichtflüchtiger Arbeitsspeicher, NVRAM, non-volatile random access memory, z.B. FeRAM, MRAM, PCRAM, NRAM.

Bei weiteren bevorzugten Ausführungsformen ist vorgesehen, dass die erste Speichereinrichtung einen One Time Programmable (OTP) - Speicher umfasst oder Teil eines One Time Programmable (OTP) - Speicher ist.

Bei weiteren bevorzugten Ausführungsformen ist vorgesehen, dass die erste Speichereinrichtung ein Hardware-Sicherheitsmodul (HSM), insbesondere ein Kryptographie-Modul, umfasst, oder Teil eines Hardware-Sicherheitsmoduls (HSM), insbesondere eines Kryptographie-Moduls, ist. Das Hardware-Sicherheitsmodul ist beispielsweise zur Ausführung von kryptographischen Verfahren bzw. Algorithmen oder zumindest von Teilen hiervon ausgebildet.

Bei weiteren bevorzugten Ausführungsformen ist vorgesehen, dass das Hardware-Sicherheitsmodul (HSM) über einen geschützten, insbesondere separaten, Speicher zur Speicherung der Zustandsvariable verfügt.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

In der Zeichnung zeigt:
- Fig 1.: ein vereinfachtes Blockdiagramm einer Vorrichtung gemäß bevorzugten Ausführungsformen und eine externe Einheit;
- Fig. 2: schematisch ein vereinfachtes Flussdiagramm eines Verfahrens gemäß weiteren bevorzugten Ausführungsformen;
- Figur 3: schematisch ein vereinfachtes Flussdiagramm von Teilen eines Verfahrens gemäß weiteren bevorzugten Ausführungsformen;
- Figur 4: schematisch ein vereinfachtes Flussdiagramm eines Verfahrens gemäß weiteren bevorzugten Ausführungsformen;
- Figur 5: schematisch ein vereinfachtes Flussdiagramm von Teilen eines Verfahrens gemäß weiteren bevorzugten Ausführungsformen, und
- Figur 6: schematisch ein vereinfachtes Flussdiagramm von Teilen eines Verfahrens gemäß weiteren bevorzugten Ausführungsformen.

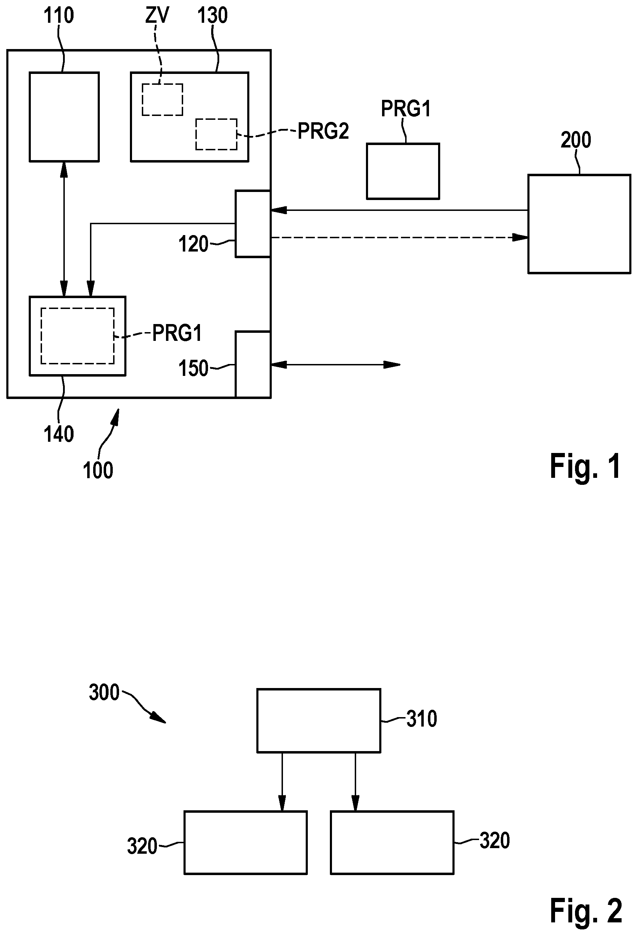

Fig. 1 zeigt schematisch ein vereinfachtes Blockdiagramm einer Vorrichtung 100 gemäß bevorzugten Ausführungsformen. Bei der Vorrichtung 100 handelt es sich bevorzugt um ein Steuergerät (Electronic Control Unit, ECU).

Bei weiteren bevorzugten Ausführungsformen kann die Vorrichtung 100 als Steuergerät, insbesondere für ein Kraftfahrzeug, beispielsweise für eine Brennkraftmaschine eines Kraftfahrzeugs, ausgebildet sein. Bei weiteren bevorzugten Ausführungsformen ist die Anwendung des Prinzips gemäß den Ausführungsformen jedoch nicht auf den Kraftfahrzeugbereich bzw. den Bereich von Steuergeräten beschränkt.

Die Vorrichtung 100 weist bevorzugt wenigstens eine Recheneinrichtung 110 auf, der beispielsweise eine Speichereinrichtung 130, 140 zugeordnet sein kann, insbesondere zur zumindest zeitweisen Speicherung wenigstens eines Computerprogramms PRG1, PRG2, insbesondere zur Steuerung eines Betriebs der Vorrichtung 100. Bei weiteren bevorzugten Ausführungsformen können in der Speichereinrichtung 130, 140 mehrere Computerprogramme gespeichert sein, z.B. ein Bootloader, also ein Computerprogramm, das einen Startprozess der Vorrichtung bzw. der Recheneinrichtung 110 der Vorrichtung 100 bzw. das Aufrufen weiterer Computerprogramme PRG1, PRG2, insbesondere nach dem Startprozess, steuern kann, sowie die weiteren Computerprogramme PRG1, PRG2, bei denen es sich beispielsweise um ein Betriebssystem und/oder Anwendungsprogramme der Vorrichtung 100 handelt.

Bei weiteren bevorzugten Ausführungsformen weist die Recheneinrichtung 110 wenigstens eines der folgenden Elemente auf: einen Mikroprozessor, einen Mikrocontroller, einen digitalen Signalprozessor (DSP), einen programmierbaren Logikbaustein (z.B. FPGA, field programmable gate array), einen ASIC (anwendungsspezifischen integrierten Schaltkreis), eine Hardwareschaltung. Bei weiteren bevorzugten Ausführungsformen sind auch Kombinationen hieraus denkbar.

Die Vorrichtung 100 weist eine Schnittstelle 120 auf. Bei der Schnittstelle 120 kann es sich beispielsweise um eine, vorzugsweise bidirektionale, Kommunikationsschnittstelle (Adressbus und/oder Datenbus und/oder serieller Kommunikationsbus oder dergleichen) handeln, über die die Vorrichtung 100 zum Datenaustausch mit einer externen Einheit 200, insbesondere zum Prüfen der Vorrichtung 100, verbindbar ist. Bei der externen Einheit handelt es sich beispielsweise um einen Computer, insbesondere einen Prüfcomputer, der eine Recheneinheit sowie zumindest einen mit der Recheneinheit verbundene Speichereinheit aufweist, und auf der eine Software, insbesondere eine Prüfsoftware, ausführbar gespeichert ist. Zum Prüfen der Vorrichtung 100, beispielsweise im Rahmen einer End-of-Line (EoL) Prüfung, insbesondere am Ende des Fertigungsprozesses der Vorrichtung 100, wird über die Schnittstelle 120 ein Computerprogramm PRG1, insbesondere zum Steuern einer Ausführung einer Prüfsoftware, insbesondere einer End-of-Line (EoL) Software, von der externen Einheit 200 in die Vorrichtung 100, insbesondere in eine Speichereinrichtung 140 der Vorrichtung 100, übertragen. Die Prüfsoftware dient bevorzugt der Hardware-Prüfung in der Produktion bzw. am Bandende, die auch für die Rückläuferanalyse verwendet werden kann.

Bei weiteren bevorzugten Ausführungsformen ist vorgesehen, dass die Schnittstelle 120 eine, insbesondere universelle, Prüf- und/oder Diagnoseschnittstelle, insbesondere eine Ethernet- oder CAN-Schnittstelle, ist.

Vorteilhafterweise ist über die Schnittstelle 120 eine Prüfung, insbesondere Hardware und/oder Software Prüfung der Vorrichtung 100 möglich. Dabei ist über die Schnittstelle 120, insbesondere beim Ausführen einer Prüfsoftware, insbesondere einer End-of-Line (EoL) Software, ein Zugriff auf Hardware der Vorrichtung 100 möglich. Um einen potenziellen Missbrauch dieses Zugriffs über die Schnittstelle 120 zu verhindern, soll die Schnittstelle 120 mit geeigneten Maßnahmen abgesichert werden. Vorteilhafte Ausführungsformen von solchen Maßnahmen zur Absicherung der Schnittstelle 120 werden im Folgenden unter Bezugnahme auf die Figuren 1 bis 6 beschrieben.

Außerdem umfasst die Vorrichtung 100 (neben der Schnittstelle 120) eine Diagnoseschnittstelle 150. Über die Diagnoseschnittstelle 150 können übliche Diagnosevorgänge während der weiteren Nutzungsphase (Feldphase), wenn sich das Fahrzeug beispielsweise im Normalbetrieb in der Werkstatt befindet, durchgeführt werden. Entsprechende mit der Diagnoseschnittstelle 150 zusammenwirkende Diagnosesoftware unterscheidet sich wesentlich von dem oben geschilderten Computerprogramm PRG 1, insbesondere zum Steuern einer Ausführung einer Prüfsoftware, insbesondere einer End-of-Line (EoL) Software. Eine entsprechende Diagnosesoftware, die im Rahmen mit der Diagnoseschnittstelle 150 ausgeführt wird, könnte beispielsweise im nichtflüchtigen Speicher 130 fest hinterlegt sein.

Über die Diagnoseschnittstelle 150 kann wie später beschrieben eine Reaktivierung der in der Feldphase stillgelegten Schnittstelle 120 eingeleitet werden. Die Schnittstelle 150 kann eine logische Schnittstelle sein, d.h. dass die Schnittstellen 120,150 zwar physikalisch auf die gleiche Schnittstelle zurückgreifen, jedoch unterschiedliche Protokolle verwenden. Alternativ können es aber auch physikalisch unterschiedliche Schnittstellen mit unterschiedlichen Ports sein.

Gemäß einer bevorzugten Ausführungsform umfasst die Vorrichtung 100 wenigstens eine erste Speichereinrichtung 130 zum nichtflüchtigen Speichern einer Zustandsvariable ZV und wenigstens eine zweite Speichereinrichtung 140 zum Speichern des wenigstens einen, insbesondere durch die Vorrichtung ausführbaren, Computerprogramms PRG1, insbesondere zum Steuern einer Ausführung einer Prüfsoftware, insbesondere einer End-of-Line (EoL) Software.

Bei der zweiten Speichereinrichtung 140 zum Speichern des Computerprogramms PRG1 handelt es sich beispielsweise um eine Speichereinrichtung zum flüchtigen Speichern des Computerprogramms PRG1, beispielsweise um einen Arbeitsspeicher, RAM, random access memory. Im Rahmen des Prüfens der Vorrichtung 100, beispielsweise im Rahmen einer End-of-Line (EoL) Prüfung (Bandende-Prüfung, Prüfung nach Produktion), insbesondere am Ende des Fertigungsprozesses der Vorrichtung 100, wird über die Schnittstelle 120 das Computerprogramm PRG1 in die Speichereinrichtung 140 der Vorrichtung 100 übertragen.

Bei weiteren bevorzugten Ausführungsformen umfasst das Computerprogramm PRG1 privilegierte Rechte, insbesondere kann beim Ausführen des Computerprogramms PRG1, insbesondere beim Ausführen einer Prüfsoftware, insbesondere einer End-of-Line (EoL) Software, ein Zugriff auf Hardware der Vorrichtung 100 und/oder das Auslesen und/oder Schreiben von Speichereinrichtungen der Vorrichtung 100 möglich sein. Um einen potenziellen Missbrauch dieser privilegierten Rechte zu verhindern, kann es vorteilhaft sein, das Computerprogramm PRG1 nach dem Ausführen aus der zweiten Speichereinrichtung 140 der Vorrichtung 100 zu löschen.

Aufgrund des charakteristischen Verhaltens von flüchtigen Speichern wird das Computerprogramm PRG1 insbesondere beim Durchführen eines Hardware, HW/ Power-off Resets, insbesondere Abschalten einer Versorgungsspannung der Vorrichtung 100, aus der zweiten Speichereinrichtung 140 gelöscht. Das Löschen des Computerprogramms PRG1 erfolgt also mit Durchführen des HW/ Power-off Resets, ein explizites Löschen ist nicht erforderlich. Ferner beansprucht das Computerprogramm PRG1 durch Verorten im flüchtigen Speicher keinen, insbesondere permanenten, Speicher der ersten Speichereinrichtung 130.

Bei dem Computerprogramm PRG1 handelt es sich insbesondere um ein Computerprogramm zum Steuern der Ausführung einer Prüfsoftware, insbesondere einer End-of-Line (EoL) Software, also einer Überprüfung der Vorrichtung 100 (beispielsweise Steuergerät eines Kraftfahrzeugs) am Bandende, also nach der Produktion der Vorrichtung 100. Gemäß weiteren bevorzugten Ausführungsformen kann das Computerprogramm PRG1 auch die Prüfsoftware, insbesondere die End-of-Line (EoL) Software, oder Teile davon umfassen. Das Computerprogramm PRG1 ist vorteilhafterweise dazu ausgebildet ist, Operationen, insbesondere systemnahe Operationen, insbesondere eine Hardware-Prüfung, insbesondere Hardware-Endprüfung, der Vorrichtung 100, und/oder eine Bedatung der Vorrichtung 100, insbesondere Übertragen und/oder Freischalten von wenigstens einer Funktion und/oder wenigstens einer Konfiguration, auszuführen Dadurch wird insbesondere im Rahmen der Produktion eine tiefgehende Hardware-Endprüfung sowie das Schreiben von produktionsrelevanten Daten in die Vorrichtung 100 über das Computerprogramm PRG1 möglich. Endgefertigte, vollständig programmierte und durch das Computerprogramm PRG1 geprüfte Vorrichtungen 100 werden im Anschluss an die Produktionsphase entweder direkt zum Kunden (beispielsweise Fahrzeughersteller) geliefert (und gelangen anschließend in die Feldphase) oder gelangen in ein Lager (Lagerphase) und anschließend an den Kunden. Die über das Computerprogramm PRG 1 angebotenen detaillierten Hardware-Prüfungen etc. können wieder im Rahmen einer Rückläuferanalyse nach Authentisierung im Rahmen der Rückläuferphase oder aber bei gesetztem ersten Analyse-Flag FA1 ausgeführt werden. Zur Erhöhung des Sicherheit gegen Missbrauch wird die Schnittstelle 120 in der Feldphase dauerhaft deaktiviert, sodass ein Zugriff auf die Vorrichtung 100 über die Schnittstelle 120 allein in der Feldphase nicht möglich ist.

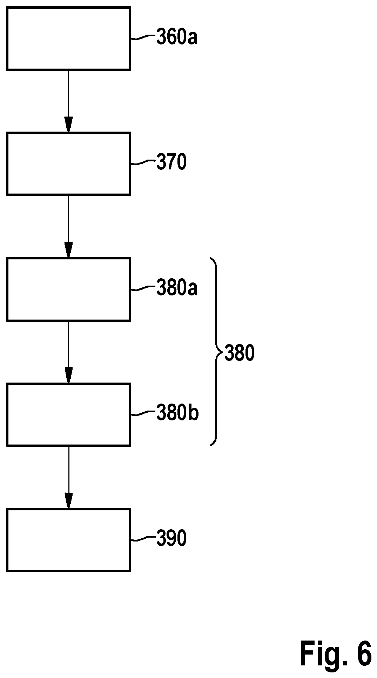

Bei weiteren bevorzugten Ausführungsformen ist das Computerprogramm PRG1 vorteilhafterweise zum Ändern der Zustandsvariable ZV ausgebildet. Das Computerprogramm PRG1 umfasst vorteilhafterweise computerlesbare Instruktionen, bei deren Ausführung durch die Vorrichtung 100, insbesondere durch die Recheneinrichtung 110 der Vorrichtung 100 das Ändern der Zustandsvariabale ZV ausgeführt wird, vgl. hierzu die nachfolgenden Beschreibungen unter Bezugnahme auf Fig. 6.

Das Computerprogramm PRG1 könnte auch Programmteile zur Durchführung einer Reprogrammierung und/oder zur Deaktivierung der Schnittstelle 120 umfassen, indem beispielsweise in dem Bootloader der Pfad zur Erreichung bzw. Adressierung der Schnittstelle 120 gelöscht wird.

Das Computerprogramm PRG1 kann insbesondere als eine Datei, insbesondere Hex-Datei, oder sukzessive als mehrere, insbesondere für sich exekutierbare-Dateien, insbesondere Hex-Dateien, in die zweite Speichereinrichtung 140 übertragen werden, wobei der Begriff Hex-Datei jegliche maschinenlesbare Codeform umfassen kann. Insbesondere kann die Übertragung des Computerprogramms PRG1 als Gesamt-Hex-Datei oder als mehrere Einzel-Hex-Dateien vorteilhafterweise an verfügbaren Speicherplatz der zweiten Speichereinrichtung 140 angepasst werden.

Bei der ersten Speichereinrichtung 130 handelt es sich beispielsweise um einen Flash-Speicher, z.B. Flash-EEPROM bzw. NOR-Flash oder NAND-Flash, oder um einen nichtflüchtigen Arbeitsspeicher, NVRAM, non-volatile random access memory, z.B. FeRAM, MRAM, PCRAM, NRAM. Vorteilhafterweise kann die Vorrichtung 100 die Zustandsvariable ZV bei Bedarf, insbesondere zum Auswerten der Zustandsvariable ZV, aus der ersten Speichereinrichtung 130 auslesen.

Die Vorrichtung 100, insbesondere die Recheneinrichtung 110 der Vorrichtung 100, ist zum Ausführen eines Verfahrens 300 ausgebildet, das im Folgenden unter Bezugnahme auf die Figuren beschrieben wird.

Weitere bevorzugte Ausführungsformen beziehen sich auf ein Verfahren 300 zum Betreiben der Vorrichtung 100, wobei das Verfahren 300 vorteilhafterweise im Rahmen und/oder im Anschluss eines Startvorgangs bzw. eines Bootvorgangs der Vorrichtung 100 ausgeführt wird. Das Verfahren 300 gemäß den Ausführungsformen umfasst die folgenden Schritte, vgl. auch das vereinfachte Flussdiagramm aus Fig. 2:
Auswerten 310 der Zustandsvariable ZV und in Abhängigkeit des Auswertens 310 Freigeben 320 oder Nicht-Freigeben 330 einer Übertragung des Computerprogramms PRG1, insbesondere zum Steuern einer Ausführung einer Prüfsoftware, insbesondere einer End-of-Line (EoL) Software, von der externen Einheit 200 über die Schnittstelle 120 in die zweite Speichereinrichtung 140. Im Anschluss an das Freigeben 320 der Übertragung wird vorteilhafterweise das Computerprogramms PRG1 in die zweite Speichereinrichtung 140 der Vorrichtung 100 übertragen und anschließend ausgeführt (in Fig. 2 nicht dargestellt).

Nach Ausführen des Computerprogramms PRG1 wird das Computerprogramm PRG1, insbesondere beim Durchführen eines HW/ Power-off Resets, insbesondere Abschalten einer Versorgungsspannung der Vorrichtung 100, aus der zweiten Speichereinrichtung 140 gelöscht. Die Reservierung von Speicherplatz durch das Computerprogramm PRG1 erfolgt also ausschließlich temporär, insbesondere im Rahmen des Prüfens der Vorrichtung 100, insbesondere im Rahmen einer End-of-Line (EoL) Prüfung. Anschließend kann der entsprechende Speicherplatz der zweiten Speichereinrichtung 140, beispielsweise beim Verwenden der Vorrichtung 100 im Normalbetrieb, beispielsweise als Steuergerät in einem Kraftfahrzeug, zum Ausführen von weiteren Funktionen, Anwendungen der Vorrichtung 100 verwendet werden.

Bei weiteren bevorzugten Ausführungsformen erfolgt das Freigeben 320 oder Nicht-Freigeben 330 der Übertragung des Computerprogramms PRG1 von der externen Einheit 200 über die Schnittstelle 120 in die zweite Speichereinrichtung 140 in Abhängigkeit der Zustandsvariable ZV.

Die Zustandsvariable ZV, insbesondere ein Wert der Zustandsvariable ZV, charakterisiert vorteilhafterweise einen Zustand der Vorrichtung 100, insbesondere eine jeweilige Phase eines Lebenszyklus der Vorrichtung 100.

Bei weiteren bevorzugten Ausführungsformen ist vorgesehen, dass ein Wert der Zustandsvariable ZV einer Nutzungsphase der Vorrichtung 100 zugeordnet ist. Das Freigeben 320 oder Nicht-Freigeben 330 der Übertragung des Computerprogramms PRG1 von der externen Einheit 200 über die Schnittstelle 120 in die zweite Speichereinrichtung 140 erfolgt also in Abhängigkeit einer Nutzungsphase der Vorrichtung 100.

Nutzungsphasen der Vorrichtung 100 gemäß bevorzugten Ausführungsformen sind beispielsweise eine erste Nutzungsphase, auch als Produktionsphase (Tier1-Produktion) bezeichnet, eine zweite Nutzungsphase, auch als Lagerphase (Lager) bezeichnet, eine dritte Nutzungsphase, auch als Feldphase (OEM-Produktion/ Feld) bezeichnet, eine vierte Nutzungsphase, auch als Rückläuferphase (Rückläuferanalyse) bezeichnet. In der ersten Nutzungsphase wird die Vorrichtung 100 produziert und befindet sich beim Hersteller (Tier1). In dieser Phase wird, insbesondere im Anschluss an den Herstellungsprozess der Vorrichtung 100, vorteilhafterweise eine Prüfung der Vorrichtung 100, beispielsweise eine End-of-Line (EoL) bzw. Bandende-Prüfung, durchgeführt. In der der zweiten Nutzungsphase wird die Vorrichtung 100 zumindest zeitweise, insbesondere in einer Lagereinrichtung des Herstellers oder in einer externen Lagereinrichtung, gelagert. In dieser Phase wird, insbesondere vor einer Auslieferung an einen Kunden, insbesondere OEM, vorteilhafterweise eine erneute Prüfung der Vorrichtung 100, beispielsweise eine End-of-Line (EoL) Prüfung, durchgeführt. In der dritten Nutzungsphase wird die Vorrichtung 100 beim Kunden, insbesondere bei einem OEM oder im Feld, verwendet. Während dieser Nutzungsphase soll keine Prüfung der Vorrichtung 100, insbesondere keine EoL-Prüfung, möglich sein. In der vierten Nutzungsphase ist die Vorrichtung 100 wieder beim Hersteller und wird dort beispielsweise im Rahmen einer Rückläuferanalyse (erneut) überprüft.

Die vorstehende Auflistung der Nutzungsphasen bezieht sich auf ein bevorzugtes Ausführungsbeispiel und ist lediglich beispielhaft. Im Rahmen der Anwendung der Erfindung kann die Vorrichtung 100 vorteilhafterweise einen Teil der genannten Nutzungsphasen und/oder weitere Nutzungsphasen umfassen.

Bei weiteren bevorzugten Ausführungsformen ist vorgesehen, dass wenn die Zustandsvariable ZV einen Wert aufweist, der der dritten Nutzungsphase, Feldphase, zugeordnet ist, also das Auswerten 310 der Zustandsvariable ZV ergibt, dass die Zustandsvariable ZV einen Wert aufweist, der der dritten Nutzungsphase, Feldphase, zugeordnet ist, eine Übertragung des Computerprogramms PRG1 von der externen Einheit 200 über die Schnittstelle 120 in die zweite Speichereinrichtung 140 nicht freigegeben wird 330. Ein Zugang über die Schnittstelle zum Übertragen des Computerprogramms PRG1, im Folgenden auch EoL-Zugang genannt, ist in der dritten Nutzungsphase, insbesondere Feldphase, also nicht verfügbar.

Bei weiteren bevorzugten Ausführungsformen ist vorgesehen, dass wenn die Zustandsvariable ZV einen Wert aufweist, der der ersten Nutzungsphase, insbesondere Produktionsphase, zugeordnet ist, also das Auswerten 310 der Zustandsvariable ZV ergibt, dass die Zustandsvariable ZV einen Wert aufweist, der der ersten Nutzungsphase, insbesondere Produktionsphase, zugeordnet ist, eine Übertragung des Computerprogramms PRG1 von der externen Einheit 200 über die Schnittstelle 120 in die zweite Speichereinrichtung 140 freigegeben wird 320.

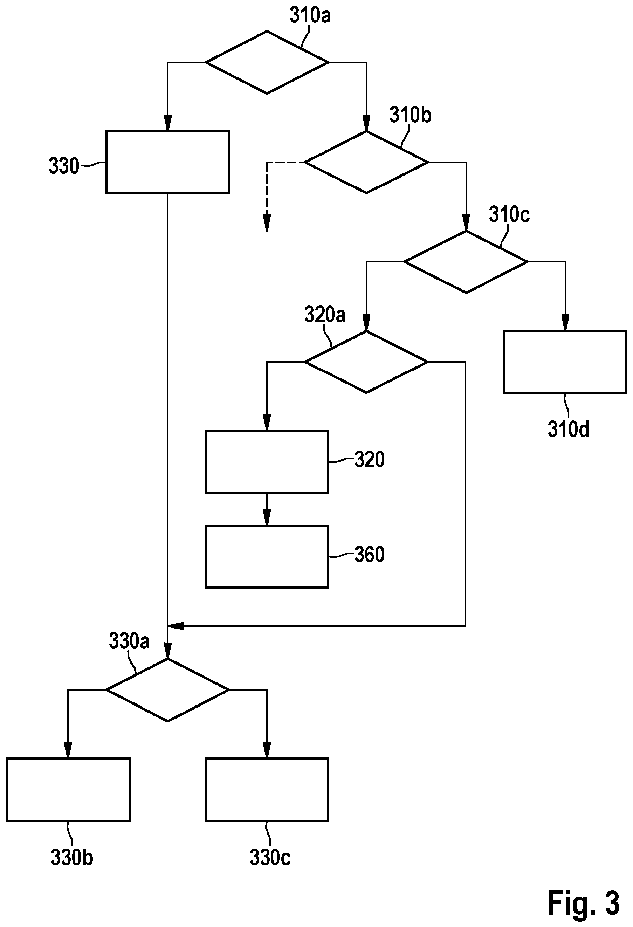

Das Auswerten 310 der Zustandsvariable ZV kann insbesondere umfassen, vgl. Fig. 3: Abfragen 310a, ob die Zustandsvariable ZV einen Wert aufweist, der der dritten Nutzungsphase, Feldphase zugeordnet ist. Wenn dies der Fall ist, erfolgt das Nicht-Freigeben 330 einer Übertragung des Computerprogramms PRG1 von der externen Einheit 200 über die Schnittstelle 120 in die zweite Speichereinrichtung 140.

Vorteilhafterweise ist vorgesehen, dass im Rahmen und/oder im Anschluss eines Startvorgangs bzw. eines Bootvorgangs der Vorrichtung 100 im Anschluss an das Nicht-Freigeben 330 in einem weiteren, insbesondere optionalen Schritt 330a abgefragt wird, ob eine Programmierungsanfrage, insbesondere eine Reprogrammierungsanfrage, insbesondere zum Programmieren der Vorrichtung 100 mit einem Anwendungsprogramm, vorliegt. Abhängig von dem Ergebnis der Abfrage 330a werden dann vorteilhafterweise weitere, insbesondere optionale, Schritte 330b Ausführen einer Programmierung, insbesondere einer Reprogrammierung, oder 330c Ausführen einer Anwendung ausgeführt.

Weiter kann das Auswerten 310 der Zustandsvariable ZV insbesondere umfassen: Abfragen 310c, ob die Zustandsvariable ZV einen Wert aufweist, der der ersten Nutzungsphase, Produktionsphase, zugeordnet ist. Wenn dies der Fall ist, wird eine Übertragung des Computerprogramms PRG1 von der externen Einheit 200 über die Schnittstelle 120 in die zweite Speichereinrichtung 140 freigegeben 320. Im Anschluss an das Freigeben 320 der Übertragung wird vorteilhafterweise das Computerprogramms PRG1 in die zweite Speichereinrichtung 140 der Vorrichtung übertragen und ausgeführt 360.

Vorteilhafterweise ist vorgesehen, dass vor dem Freigeben 320 der Übertragung des Computerprogramms PRG1 in einem Schritt 320a weiter abgefragt wird, ob eine Anfrage zur Durchführung einer Prüfung, insbesondere einer End-of-Line (EoL) Prüfung, der Vorrichtung 100 vorliegt, und erst, wenn dies der Fall ist, eine Übertragung des Computerprogramms PRG1 von der externen Einheit 200 über die Schnittstelle 120 in die zweite Speichereinrichtung 140 freigegeben 320 wird. Weiter kann vorteilhafterweise vorgesehen sein, dass wenn dies nicht der Fall ist, in dem weiteren, insbesondere optionalen, Schritt 330a abgefragt wird, ob eine Programmierungsanfrage, insbesondere eine Reprogrammierungsanfrage, insbesondere zum Programmieren der Vorrichtung 100 mit einem Anwendungsprogramm, vorliegt. Abhängig von dem Ergebnis der Abfrage 330a werden dann vorteilhafterweise weitere, insbesondere optionale, Schritte 330b Ausführen einer Programmierung, insbesondere einer Reprogrammierung, oder 330c Ausführen einer Anwendung ausgeführt.

Bei weiteren bevorzugten Ausführungsformen ist vorgesehen, dass die Vorrichtung 100 wenigstens 2, 3, insbesondere 4 oder 5, verschiedene Nutzungsphasen aufweist, wobei eine jeweilige Nutzungsphase insbesondere durch eine jeweilige Sicherheitsanforderung charakterisiert ist, und insbesondere wenigstens ein erster Wert der Zustandsvariable ZV einer ersten Nutzungsphase zugeordnet ist, wobei die erste Nutzungsphase der Vorrichtung 100 durch eine niedrige Sicherheitsanforderung charakterisiert ist und wenigstens ein weiterer, insbesondere ein zweiter, Wert einer weiteren, insbesondere einer zweiten, Nutzungsphase der Vorrichtung 100 zugeordnet ist, wobei die weitere, insbesondere zweite, Nutzungsphase der Vorrichtung 100 durch eine hohe Sicherheitsanforderung charakterisiert ist. Bei den Nutzungsphasen handelt es sich vorteilhafterweise um die oben genannten Nutzungsphasen, nämlich die erste Nutzungsphase, auch als Produktionsphase (Tier1-Produktion) bezeichnet, die zweite Nutzungsphase, auch als Lagerphase (Lager) bezeichnet, die dritte Nutzungsphase, auch als Feldphase (OEM-Produktion/ Feld) bezeichnet und die vierte Nutzungsphase, auch als Rückläuferphase (Rückläuferanalyse) bezeichnet.

Die erste Nutzungsphase ist beispielsweise die Produktionsphase. In dieser Phase befindet sich die Vorrichtung in "sicherer" Umgebung eines Herstellers (Tier1). Vorteilhaftweise ist die erste Nutzungsphase daher durch eine niedrige Sicherheitsanforderung charakterisiert. In der ersten Nutzungsphase der Vorrichtung 100 (Zustandsvariable ZV entspricht einem ersten Wert) ist eine Ausführung und/oder Übertragung des Computerprogramms PRG1 ohne Authentifizierung (vergleiche Schritt 340) freigegeben. Das Computerprogramm PRG1 wird von dem Bootloader (FBL, Flash Boot Loader, ein Software-Modul zum Laden/Schreiben von Software in die flüchtige oder nicht flüchtige Speichereinrichtung 140,130) in die zweite Speichereinrichtung 140 geladen und von dort ausgeführt. Nach Durchführung eines Hardware/Power-off-Resets wird das Computerprogramm PRG1 aufgrund des charakteristischen Verhaltens der flüchtigen zweiten Speichereinrichtung 140 automatisch aus dem RAM gelöscht. Es muss kein zusätzlicher dauerhafter Speicherbereich für das Computerprogramm PRG1 vorgehalten werden. Außerdem wird dadurch die Sicherheit erhöht, da das Computerprogramm PRG1 nicht dauerhaft auf der Vorrichtung 100 verbleibt. Die Schnittstelle 120 ist somit verfügbar und nicht abgesichert, insbesondere im Rahmen des erstmaligen Produktionsdurchlaufs.

Die optionale zweite Nutzungsphase ist beispielsweise die Lagerphase. Insbesondere ist vorgesehen, dass die Vorrichtung 100 in der zweiten Nutzungsphase die sichere Umgebung des Herstellers verlassen hat oder noch verlassen wird. Um einen Missbrauch des Zugriffs über die Schnittstelle 120 zu verhindern, gelten vorteilhafterweise wenigstens für die zweite Nutzungsphase erhöhte Sicherheitsanforderungen an die Absicherung der Schnittstelle 120. Vorteilhafterweise ist daher wenigstens die optionale zweite, Nutzungsphase durch eine hohe, insbesondere eine gegenüber der Sicherheitsanforderung der ersten Nutzungsphase erhöhte, Sicherheitsanforderung charakterisiert. In der optionalen zweiten Nutzungsphase (die Zustandsvariable ZV nimmt den optionalen zweiten Wert an) der Vorrichtung 100 wird eine Ausführung und/oder Übertragung des Computerprogramms PRG1 nur nach Authentisierung (beispielsweise später beschriebener Schritt 340) freigegeben. In der optionalen zweiten Nutzungsphase ist somit die Schnittstelle 120 prinzipiell verfügbar, jedoch erst nach Authentisierung (kryptographisch abgesichert).

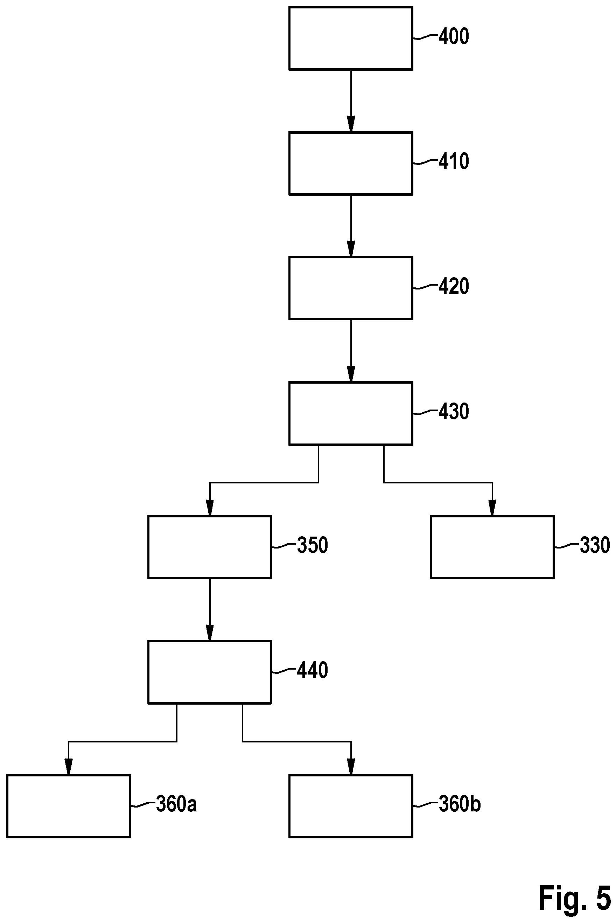

Insbesondere kann vorgesehen sein, dass in der optionalen zweiten Nutzungsphase der Vorrichtung 100 die Freigabe der Übertragung des Computerprogramms PRG1, insbesondere zum Steuern einer Ausführung einer Prüfsoftware, insbesondere einer End-of-Line (EoL) Software, von der externen Einheit 200 über die Schnittstelle 120 in die zweite Speichereinrichtung 140 der Vorrichtung 100, und damit insbesondere ein Zugriff auf Hardware der Vorrichtung 100, an eine erfolgreiche Authentisierung der externen Einheit 200 und/oder eines Benutzers der externen Einheit 200 gekoppelt ist. Als weitere Sicherheitsmaßnahme kann eine Freigabe der Ausführung des Computerprogramms PRG1 an eine erfolgreiche Authentifizierung des Computerprogramms PRG1 gekoppelt sein. Dies wird später unter Bezugnahme auf Figur 5 beschrieben.

Weiter kann ein weiterer, insbesondere ein dritter, Wert der Zustandsvariable ZV einer weiteren, insbesondere der dritten, Nutzungsphase der Vorrichtung 100 zugeordnet sein, wobei wenigstens die weitere, insbesondere die dritte, Nutzungsphase durch eine hohe, insbesondere eine gegenüber der Sicherheitsanforderung der ersten Nutzungsphase und/oder insbesondere gegenüber der zweiten Nutzungsphase erhöhte, Sicherheitsanforderung charakterisiert ist. Die weitere bzw. dritte Nutzungsphase ist beispielsweise die Feldphase. In dieser Phase hat die Vorrichtung 100 die "sichere" Umgebung des Herstellers verlassen, und befindet sich entweder beim OEM oder im Feld. Insbesondere ist vorgesehen, dass in der weiteren bzw. dritten Nutzungsphase der Vorrichtung 100 die Übertragung des Computerprogramms PRG1, insbesondere zum Steuern einer Ausführung einer Prüfsoftware, insbesondere einer End-of-Line (EoL) Software, von der externen Einheit 200 über die Schnittstelle 120 in die zweite Speichereinrichtung 140 der Vorrichtung 100, und damit insbesondere ein Zugriff auf Hardware der Vorrichtung 100, nicht freigegeben wird. In der weiteren Nutzungsphase, insbesondere Feldphase, ist die Diagnoseschnittstelle 150 weiterhin verfügbar. Eine Reaktivierung der Schnittstelle 120 kann in Verbindung mit einer über die Diagnoseschnittstelle 150 eingeleiteten erfolgreichen Authentisierung erfolgen.

Weiter kann ein noch weiterer, insbesondere ein vierter, Wert der Zustandsvariable ZV einer noch weiteren, insbesondere der vierten, Nutzungsphase der Vorrichtung 100 zugeordnet sein, wobei wenigstens die noch weitere, insbesondere die vierte, Nutzungsphase durch eine hohe, insbesondere eine zumindest gegenüber der Sicherheitsanforderung der ersten Nutzungsphase erhöhte, Sicherheitsanforderung charakterisiert ist. Die noch weitere bzw. vierte Nutzungsphase ist beispielsweise die Rückläuferphase. In dieser Nutzungsphase ist die Vorrichtung 100 wieder beim Hersteller und wird dort beispielsweise im Rahmen einer Rückläuferanalyse (erneut) überprüft. Insbesondere kann vorteilhafterweise vorgesehen sein, dass in der noch weiteren bzw. vierten Nutzungsphase der Vorrichtung 100 die Freigabe der Übertragung des Computerprogramms PRG1, insbesondere zum Steuern einer Ausführung einer Prüfsoftware, insbesondere einer End-of-Line (EoL) Software, von der externen Einheit 200 über die Schnittstelle 120 in die zweite Speichereinrichtung 140 der Vorrichtung 100, und damit insbesondere ein Zugriff auf Hardware der Vorrichtung 100, an eine erfolgreiche Authentisierung der externen Einheit 200 und/oder eines Benutzers der externen Einheit 200 gekoppelt ist, wie dies vorstehend schon im Zusammenhang mit der optionalen zweiten Nutzungsphase erwähnt wurde. Ferner kann eine Freigabe der Ausführung des Computerprogramms PRG1 an eine erfolgreiche Authentifizierung des Computerprogramms PRG1 gekoppelt sein. Dies wird später ebenfalls unter Bezugnahme auf Figur 5 beschrieben. Wie beschrieben kann somit eine Reaktivierung der (in der Feldphase stillgelegten) Schnittstelle 120 in der noch weiteren bzw. vierten Nutzungsphase, insbesondere Analysephase, erfolgten. Der entsprechende noch weitere Wert der Zustandsvariable ZV wird irreversibel inkrementiert, sprich ein Wechsel in die vorherige Phase (Feldphase) ist in dieser Variante nicht möglich.

In einem alternativen Ausführungsbeispiel könnte eine Reaktivierung der Schnittstelle 120 (nach Authentisierung) mit einem Setzen eines ersten Analyse-Flags FA einhergehen, ohne zunächst die Feldphase zu verlassen.

Gemäß den beschriebenen Ausführungsformen ist die weitere bzw. dritte Nutzungsphase vorteilhafterweise durch die höchste Sicherheitsanforderung charakterisiert. Die erste Nutzungsphase ist vorteilhafterweise durch die geringste Sicherheitsanforderung charakterisiert. Die Sicherheitsanforderungen der optionalen zweiten und der noch weiteren bzw. vierten Nutzungsphase liegen zwischen den Sicherheitsanforderungen der ersten und weiteren bzw. dritten Nutzungsphase. Insbesondere befindet sich die Vorrichtung 100 in den Nutzungsphasen zwei, drei und vier nicht mehr in der sicheren Umgebung des Herstellers, oder befand sich zumindest zeitweise außerhalb der sicheren Umgebung des Herstellers, so dass ein unbefugter Zugriff nicht ausgeschlossen werden kann.

Vorteilhafterweise verfügt die Vorrichtung 100 in der dritten Nutzungsphase, der Feldphase, über den maximalen Absicherungsgrad der Schnittstelle 120, d.h. der EoL-Zugang ist in der Feldphase weder verfügbar noch reaktivierbar. In der ersten Nutzungsphase verfügt die Vorrichtung 100 über den vergleichsweise geringsten Absicherungsgrad der Schnittstelle 120, d.h. der EoL-Zugang ist in der ersten Nutzungsphase, auch als Produktionsphase (Tier1-Produktion) bezeichnet, insbesondere ohne weitere Authentisierungsvorgänge, verfügbar.

Vorteilhafterweise wird im Rahmen des Startvorgangs bzw. des Bootvorgangs der Vorrichtung 100 beim Auswerten 310 der Zustandsvariable zunächst in einem Schritt 310a abgefragt, ob die Zustandsvariable ZV den Wert aufweist, der der weiteren bzw. dritten Nutzungsphase, Feldphase, zugeordnet ist, vgl. Fig. 3. Wenn dies nicht der Fall ist, wird einem Schritt 310b abgefragt, ob die Zustandsvariable ZV den Wert aufweist, der der optionalen zweiten oder der noch weiteren bzw. vierten Nutzungsphase, zugeordnet ist. Wenn dies nicht der Fall ist, wird in einem Schritt 310c abgefragt, ob die Zustandsvariable ZV den Wert aufweist, der der ersten Nutzungsphase zugeordnet ist. Vorteilhafterweise erfolgen die Schritte zur Abfrage 310a, 310b, 310c im Rahmen des Auswertens 310 der Zustandsvariable ZV in der Reihenfolge, dass zuerst der Wert abgefragt wird, der der Nutzungsphase mit dem maximalen Absicherungsgrad der Schnittstelle 120 zugeordnet ist, und zuletzt der Wert abgefragt wird, der der Nutzungsphase mit dem geringsten Absicherungsgrad der Schnittstelle 120 zugeordnet ist. Vorteilhafterweise müssten so im Falle eines Missbrauchs, insbesondere im Rahmen einer Glitching-Attacke mehrere Barrieren überwunden werden.

Vorteilhafterweise kann weiter vorgesehen sein, dass wenn das Auswerten 310, 310a, 310b, 310c der Zustandsvariable ZV keinen gültigen Wert ergibt, insbesondere, wenn die Zustandsvariable ZV keinen der Werte aufweist, die den Nutzungsphasen der Vorrichtung 100 zugeordnet sind, ein weiterer optionaler Schritt 310d ausgeführt wird, wobei der Schritt 310d insbesondere umfasst:
Detektieren eines Fehlers und/oder Versetzen der Vorrichtung 100 in einen Fehlermodus.

Bei weiteren bevorzugten Ausführungsformen ist vorgesehen, dass das Verfahren den weiteren Schritt 380 umfasst: Ändern des Werts der Zustandsvariable ZV in Abhängigkeit von einer Nutzungsphase der Vorrichtung 100 und/oder eines Übergangs von einer Nutzungsphase der Vorrichtung 100 in eine weitere Nutzungsphase der Vorrichtung 100, wobei das Ändern des Werts der Zustandsvariable ZV inkrementell, insbesondere irreversibel, erfolgt. Dies bedeutet, dass eine bereits durchlaufende Nutzungsphase nach Übergang in die nächste Nutzungsphase nicht erneut durchlaufen werden kann. Vorteilhafterweise erfolgt das Ändern 380 der Zustandsvariable ZV im Anschluss an das Freigeben 320 der Übertragung des Computerprogramms PRG1 und der Übertragung und Ausführung 360 zumindest von Teilen des Computerprogramms PRG1.

Bei weiteren bevorzugten Ausführungsformen ist das Computerprogramm PRG1 vorteilhafterweise zum Ändern 380 der Zustandsvariable ZV ausgebildet.

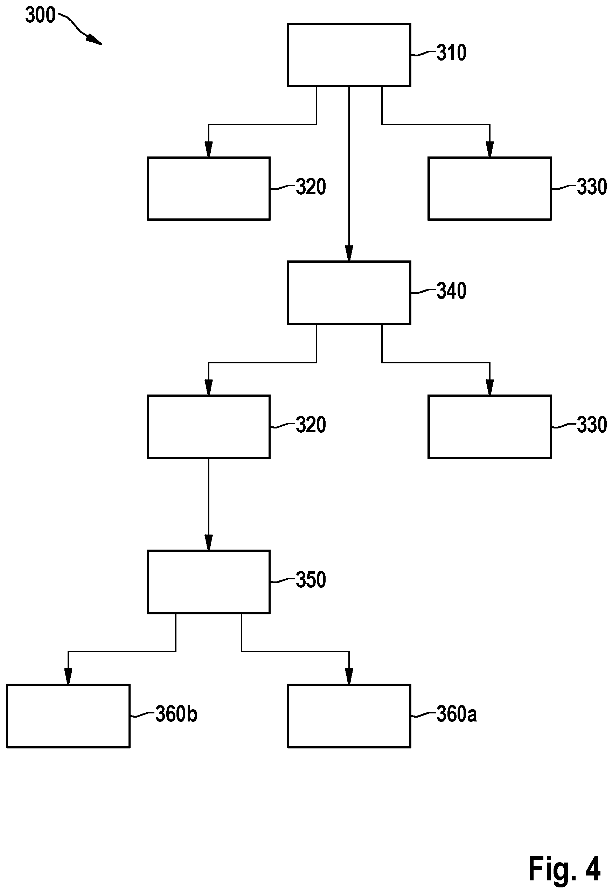

Das Ändern 380 des Werts der Zustandsvariable ZV wird nachstehend unter Bezugnahme auf Fig. 6 beschrieben. Gemäß der dargestellten Ausführungsform, weist die Zustandsvariable ZV zunächst einen Wert auf, der der ersten Nutzungsphase zugeordnet ist. Nach dem Auswerten 310 der Zustandsvariable ZV wurde die Übertragung des Computerprogramms PRG1 freigegeben 320 und das Computerprogramm PRG1 in die zweite Speichereinrichtung 140 übertragen (in Fig. 6 nicht dargestellt). In einem Schritt 360 wird das Computerprogramm PRG1, insbesondere wenigstens Teile des Computerprogramms PRG1, insbesondere zum Steuern einer Ausführung 360 einer Prüfsoftware, insbesondere einer End-of-Line (EoL) Software, ausgeführt. Das Ausführen des Computerprogramms PRG1 umfasst vorteilhafterweise das Ausführen 360a einer Hardware-Prüfung. Gemäß der dargestellten Ausführungsform umfasst das Ausführen 360 des Computerprogramms PRG1 weiter den optionalen Schritt 370 Absichern, insbesondere kryptographisch, insbesondere mittels eines signaturbasierten oder schlüsselanhängigen prüfsummenbasierten, auch als Message Authentification Code, MAC, bezeichneten, Ansatzes, der Schnittstelle 120 der Vorrichtung 100. Dieser Schritt kann sich insbesondere im Zusammenhang mit weiteren Authentisierungs- und/oder Authentifizierungsmaßnahmen, vgl. Fig. 4 und 5, als vorteilhaft erweisen.

Gemäß der dargestellten Ausführungsform umfasst das Ausführen 360 des Computerprogramms PRG1 weiter den optionalen Schritt 380 Ändern der Zustandsvariable ZV. Das Ändern 380 kann vorteilhafterweise umfassen: Ändern des Werts Zustandsvariabale in den Wert, der der nachfolgenden Nutzungsphase zugeordnet ist. Vorteilhafterweise kann der Wert der Zustandsvariable ZV nur in den Wert, der einer nachfolgenden Nutzungsphase zugeordnet ist, und nicht in einen Wert, der einer vorhergehenden Nutzungsphase zugeordnet ist, geändert werden. Gemäß den beschriebenen Ausführungsformen kann der Wert der Zustandsvariable ZV beispielsweise vom Wert der ersten Nutzungsphase in den Wert der zweiten Nutzungsphase, vom Wert der zweiten Nutzungsphase in den Wert der dritten Nutzungsphase und vom Wert der dritten Nutzungsphase in den Wert der vierten Nutzungsphase geändert werden 380.

Vorteilhafterweise kann das Ändern 380 des Werts der Zustandsvariable ZV nicht rückgängig gemacht werden.

Gemäß der in Fig. 6 dargestellten Ausführungsform wird der Wert der Zustandsvariable ZV zunächst von dem Wert der ersten Nutzungsphase in den Wert der zweiten Nutzungsphase, Lagerphase, geändert 380a. Anschließend wird, wenn die Vorrichtung 100 an den Kunden ausgeliefert wird, also die anstehende, nachfolgende Nutzungsphase die dritte Nutzungsphase, Feldphase ist, der Wert der Zustandsvariable von dem Wert der zweiten Nutzungsphase in den Wert der dritten Nutzungsphase geändert 380b. Bei weiteren bevorzugten Ausführungsformen kann, wenn beispielsweise die Vorrichtung 100 nach der Produktion ohne Zwischenlagerung direkt an den Kunden ausgeliefert wird, der Wert der Zustandsvariable ZV von dem Wert der ersten Nutzungsphase in den Wert der dritten Nutzungsphase, Feldphase, geändert werden.

Bei weiteren bevorzugten Ausführungsformen ist vorgesehen, dass die erste Speichereinrichtung 130, vgl. Fig. 1, einen One Time Programmable (einmalig programmierbarer, OTP) - Speicher umfasst oder Teil eines One Time Programmable (OTP) - Speicher ist. Vorteilhafterweise ist der OTP-Speicher, als sogenannte "OTP-Area" in der ersten Speichereinrichtung 130, insbesondere in dem Flash-Speicher, implementiert. Solch eine OTP-Area ist insbesondere durch eine Zusatzlogik gegen Veränderung gesichert. Vorteilhafterweise ist die Zusatzvariable ZV und/oder das erste Analyse-Flag FA1 in dem OTP-Speicher gespeichert.

Bei weiteren bevorzugten Ausführungsformen ist vorgesehen, dass die erste Speichereinrichtung 130 ein Hardware-Sicherheitsmodul (HSM), insbesondere ein Kryptographie-Modul, umfasst, oder Teil eines Hardware-Sicherheitsmodul (HSM), insbesondere eines Kryptographie-Modul, ist. Das Hardware-Sicherheitsmodul ist beispielsweise zur Ausführung von kryptographischen Verfahren bzw. Algorithmen oder zumindest von Teilen hiervon ausgebildet. Bei weiteren bevorzugten Ausführungsformen ist vorgesehen, dass das Hardware-Sicherheitsmodul (HSM) über einen geschützten, insbesondere separaten, Speicher zum Speichern der Zustandsvariable ZV und/oder des ersten Analyse-Flags FA1 verfügt. Besonders bevorzugt hat nur die Vorrichtung 100, insbesondere die Recheneinrichtung 110 der Vorrichtung 100, die zur Ausführung des Verfahrens gemäß den Ausführungsformen ausgebildet ist, Zugriff auf die in dem Hardware-Sicherheitsmodul gespeicherte Zustandsvariable ZV. Bei weiteren bevorzugten Ausführungsformen ist vorgesehen, dass das Hardware-Sicherheitsmodul bzw. Kryptographiemodul das Verfahren gemäß den Ausführungsformen zumindest teilweise oder vollständig ausführt, insbesondere den Schritt 380 Ändern der Zustandsvariable ZV. Bei weiteren bevorzugten Ausführungsformen ist vorgesehen, dass das Hardware-Sicherheitsmodul bzw. Kryptographiemodul die Zustandsvariable ZV verwaltet (insbesondere speichert und/oder ändert), und/oder auswertet. Bei weiteren bevorzugten Ausführungsformen ist vorgesehen, dass das Hardware-Sicherheitsmodul bzw. Kryptographiemodul dazu ausgebildet ist, ein Ergebnis des Auswertens der Zustandsvariable an eine weitere Einheit, z.B. die Recheneinrichtung 110, auszugeben.

Bei weiteren Ausführungsformen kann vorgesehen sein, dass der EoL-Zugang, also das Übertragen von EoL-Software über die Schnittstelle, vollständig eliminiert wird. Dies ist beispielhaft durch den optionalen Schritt 390, vgl. Fig. 6, dargestellt. In diesem Fall wird vor Auslieferung an den Kunden, also vor dem Übergang in die die dritte Nutzungsphase, Feldphase, der EoL-Zugang eliminiert 390. In diesem Fall wird das erfindungsgemäße Verfahren 300 für die erste oder für die erste und zweite Nutzungsphase ausgeführt und am Ende der Ausführung des Computerprogramms PRG1 entsprechenden EoL-Zugangspfade, insbesondere aus dem Bootloader, gelöscht. In diesem Fall wird im Rahmen eines Startprozesses bzw. eines Bootprozesses der Recheneinrichtung 110 bzw. der Vorrichtung 100 das Verfahren 300 nicht mehr ausgeführt. Demgemäß sind eine Reaktivierung des EoL-Zugangs und damit eine Rückläuferanalyse im Rahmen einer erneuten EoL-Prüfung ausgeschlossen.

Bei weiteren bevorzugten Ausführungsformen ist vorteilhafterweise vorgesehen, dass die Schnittstelle 120 der Vorrichtung 100 in einem optionalen Schritt 370, insbesondere kryptographisch, insbesondere mittels eines signaturbasierten oder schlüsselabhängigen prüfsummenbasierten, auch als Message Authentification Code, MAC, bezeichneten, Ansatzes, abgesichert wird, vgl. Fig. 6. Dies macht für spätere Zugriffe über die Schnittstelle 120, insbesondere zum Übertragen von Computerprogramm, weitere Authentisierungs- und/oder Authentifizierungsmaßnahmen erforderlich. Das Absichern 370 kann sich im Zusammenhang mit den unter Bezugnahme auf Fig. 4 und 5 nachstehend beschriebenen Ausführungsformen des Verfahrens 300 als vorteilhaft erweisen.

Bei weiteren bevorzugten Ausführungsformen ist vorgesehen, dass das Verfahren 300 weiter aufweist, vgl. Fig. 4: Authentisieren 340 der externen Einheit 200 und/oder eines Benutzers der externen Einheit 200, wobei nach erfolgreichem Authentisieren 340 das Freigeben 320 der Übertragung des wenigstens einen Computerprogramms PRG1 von der externen Einheit 200 über die Schnittstelle 120 in die zweite Speichereinrichtung 140 erfolgt, und nach nicht erfolgreichem Authentisieren 340 das Nicht-Freigeben 330 der Übertragung des wenigstens einen Computerprogramms PRG1 von der externen Einheit 200 über die Schnittstelle 120 in die zweite Speichereinrichtung 140 erfolgt.

Bei weiteren bevorzugten Ausführungsformen ist vorgesehen, dass das Authentisieren 340 der externen Einheit 200 und/oder eines Benutzers der externen Einheit 200 unter Verwendung eines signaturbasierten oder schlüsselabhängigen prüfsummenbasierten Ansatzes erfolgt.

Es kann vorgesehen sein, dass das Authentisieren 340 unabhängig von einem Wert der Zustandsvariable ZV ausgeführt wird.

Bei weiteren bevorzugten Ausführungsformen ist vorteilhafterweise vorgesehen, dass das Authentisieren 340 in Abhängigkeit eines Werts der Zustandsvariable ZV ausgeführt wird.

Bei weiteren bevorzugten Ausführungsformen ist vorgesehen, dass das Authentisieren 340, wenn die Zustandsvariable ZV den weiteren, insbesondere zweiten oder vierten, Wert aufweist, ausgeführt wird, und insbesondere, wenn die Zustandsvariable ZV den ersten Wert aufweist, nicht ausgeführt wird.

Insbesondere wird das Authentisieren 340 nicht ausgeführt, wenn die Zustandsvariable ZV einen Wert aufweist, der einer Nutzungsphase der Vorrichtung 100 mit einer geringen Sicherheitsanforderung, insbesondere der ersten Nutzungsphase, zugeordnet ist. Wenn sich die Vorrichtung 100 in der ersten Nutzungsphase, insbesondere beim Hersteller, befindet, ist die Schnittstelle 120 aus Performance- bzw. Taktzeitgründen nicht kryptographisch abgesichert, d.h. das Freigeben 320 der Übertragung des Computerprogramms PRG1 von der externen Einheit 200 über die Schnittstelle 120 in die zweite Speichereinrichtung 140 der Vorrichtung 100 erfolgt ohne einen weiteren Authentisierungsvorgang 340, vgl. Fig. 4. Vorteilhaftweise wird im Rahmen der Ausführung 360 des Computerprogramms PRG1, insbesondere im Anschluss an das Ausführen 360a einer Hardware-Prüfung, in dem Schritt 370 die Schnittstelle 120 insbesondere kryptographisch, abgesichert 370, vgl. Fig. 6.

Vorteilhafterweise wird das Authentisieren 340 ausgeführt, wenn die Zustandsvariable ZV einen Wert aufweist, der der zweiten oder vierten Nutzungsphase der Vorrichtung 100 zugeordnet ist. Insbesondere wird das Authentisieren 340 für Nutzungsphasen ausgeführt, in denen und/oder vor denen sich die Vorrichtung 100 zumindest zeitweise außerhalb der sicheren Umgebung des Herstellers befindet oder befand.

Beispielsweise soll in der zweiten Nutzungsphase, nach Lagerung von einer, insbesondere endgefertigten, insbesondere vollständig programmierten, Vorrichtung 100 in einem, insbesondere Hersteller-externen, insbesondere "freizugänglichen", Lager, vor Auslieferung an den Kunden eine erneute Prüfung der Vorrichtung 100, insbesondere eine End-of-Line (EoL) Prüfung, insbesondere eine Hardware-Prüfung, insbesondere Hardware-Endprüfung, der Vorrichtung 100, und/oder eine Bedatung der Vorrichtung 100, ausgeführt werden. Die Schnittstelle 120 ist nun kryptographisch abgesichert, so dass ein Authentisierungsvorgang 340 erforderlich ist.

Bei weiteren bevorzugten Ausführungsformen ist vorgesehen, dass das Verfahren weiter umfasst: Authentifizieren 350 des übertragenen Computerprogramms PRG1, wobei nach erfolgreichem Authentifizieren 350 des übertragenen Computerprogramms PRG1 das Ausführen 360a zumindest von Teilen des übertragenen Computerprogramms PRG1 durch die Vorrichtung 100 erfolgt, und nach nicht erfolgreichem Authentifizieren 350 des Computerprogramms PRG1 das Nicht-Ausführen 360b des übertragenen Computerprogramms erfolgt.

Bei weiteren bevorzugten Ausführungsformen ist vorgesehen, dass das Authentifizieren 350 des übertragenen Computerprogramms PRG1 unter Verwendung eines signaturbasierten oder schlüsselabhängigen prüfsummenbasierten Ansatzes erfolgt.

Bei weiteren bevorzugten Ausführungsformen ist vorgesehen, dass das Authentisieren 340 der externen Einheit 200 und/oder eines Benutzers der externen Einheit 200 und/oder das Authentifizieren 350 des übertragenen Computerprogramms PRG1 unter Verwendung von wenigstens einem kryptographischen, insbesondere privaten, Schlüssel, erfolgt.

Bei weiteren bevorzugten Ausführungsformen ist vorgesehen, dass das Authentisieren 340 der externen Einheit 200 und/oder eines Benutzers der externen Einheit 200 und/oder das Authentifizieren 350 des übertragenen Computerprogramms PRG1 weiter umfasst: Erzeugen einer Challenge, insbesondere umfassend eine Zufallszahl und/oder eine Pseudozufallszahl, Übertragen der Challenge an die externe Einheit und Empfangen der signierten Challenge von der externen Einheit.

Das Authentisieren 340 der externen Einheit 200 und/oder eines Benutzers der externen Einheit 200 und/oder das Authentifizieren 350 des übertragenen Computerprogramms PRG1 wird für den signaturbasierten Ansatz nun unter Bezugnahme auf Fig. 4 und 5 beschrieben.

Das Authentisieren der externen Einheit 200 und/oder eines Benutzers der externen Einheit 200 gegenüber der Vorrichtung 100 umfasst insbesondere das Stellen einer Sicherheitsanfrage durch die externen Einheit 200 und/oder des Benutzers der externen Einheit 200. Das Stellen der Sicherheitsanfrage könnte beispielsweise (insbesondere in der weiteren Nutzungsphase, Feldphase, in der die Schnittstelle 120 deaktiviert ist, während die Diagnoseschnittstelle 150 aktiviert bleibt) über die Diagnoseschnittstelle 150 erfolgen. In einem Schritt 400 wird daraufhin eine Challenge, insbesondere umfassend eine Zufallszahl und/oder eine Pseudozufallszahl erzeugt und an die externe Einheit 200, insbesondere als Antwort auf die gestellte Sicherheitsanfrage, übertragen 410.

Bei weiteren Ausführungsformen ist vorgesehen, dass das Erzeugen 400 der Challenge per HSM oder durch Generieren mittels einer geeigneten Software erfolgt. Die externe Einheit 200 und/oder der Benutzer der externen Einheit 200 signiert die Challenge mit einem, insbesondere projektspezifischen, privaten Schlüssel und überträgt die signierte Challenge an die Vorrichtung 100.

In einem Schritt 420 empfängt die Vorrichtung 100 die signierte Challenge. In einem Schritt 430 verifiziert die Vorrichtung 100 die empfangene signierte Challenge mittels eines zum privaten Schlüssel der externen Einheit 200 und/oder des Benutzers der externen Einheit 200 passenden weiteren, insbesondere öffentlichen, Schlüssels.

Im Falle einer erfolgreichen Verifikation 420, wenn also der weitere Schlüssel der Vorrichtung 100 und der private Schlüssel der externen Einheit 200 und/oder des Benutzers der externen Einheit 200 zueinander passen, wird die Übertragung des Computerprogramms PRG1 freigegeben 320. Im Falle einer nicht erfolgreichen Verifikation 420 erfolgt das Nicht-Freigeben 330 der Übertragung.

Gemäß der dargestellten Ausführungsform ist weiter vorgesehen, dass das Verfahren weiter umfasst: Authentifizieren 350 des übertragenen Computerprogramms PRG1, wobei das Ausführen 360a des Computerprogramms PRG1 erst nach erfolgreichem Authentifizieren 350 erfolgt.

Bei weiteren bevorzugten Ausführungsformen ist vorgesehen, dass das Authentifizieren 350 des übertragenen Computerprogramms PRG1 weiter umfasst: Empfangen 350a des signierten Computerprogramms PRG1.

Zu diesem Zweck signiert die externe Einheit 200 und/oder der Benutzer der externen Einheit das Computerprogramm PRG1 ebenfalls mit einem, insbesondere projektspezifischen, privaten Schlüssel und überträgt das signierte Computerprogramm PRG1 an die Vorrichtung 100. Die Vorrichtung 100 empfängt 350a das signierte Computerprogramm PRG1.

In einem Schritt 440 verifiziert die Vorrichtung 100 das empfangene signierte Computerprogramm PRG1 mittels eines zum privaten Schlüssel der externen Einheit 200 und/oder des Benutzers der externen Einheit 200 passenden weiteren, insbesondere öffentlichen, Schlüssels.

Im Falle einer erfolgreichen Verifikation 440, wenn also der weitere Schlüssel der Vorrichtung 100 und der private Schlüssel der externen Einheit 200 und/oder des Benutzers der externen Einheit 200 zueinander passen, wird das Computerprogramm PRG1 ausgeführt 360a. Im Falle einer nicht erfolgreichen Verifikation 440 wird das Computerprogramm nicht ausgeführt 360b.

Im Rahmen der Ausführung 360a des Computerprogramms PRG1 erfolgt, insbesondere nach erfolgreicher Durchführung der Hardware-Prüfung, das Ändern 380 des Werts der Zustandsvariable von dem Wert der zweiten Nutzungsphase in den Wert der dritten Nutzungsphase, vgl. Fig. 6.

Bei weiteren bevorzugten Ausführungsformen ist vorgesehen, dass das Authentisieren 340 der externen Einheit und das Authentifizieren 350 des Computerprogramms, wenn die Zustandsvariable ZV den noch weiteren bzw. vierten Wert aufweist, ausgeführt wird, und wenn die Zustandsvariable ZV den weiteren bzw. dritten Wert aufweist, nicht ausgeführt wird.

Gemäß den dargestellten Ausführungsformen ist in der weiteren bzw. dritten Nutzungsphase der EoL-Zugang über die Schnittstelle 120 weder verfügbar noch reaktivierbar. Daher wird das Authentisieren 340, wenn die Zustandsvariable ZV den weiteren bzw. dritten Wert aufweist, nicht ausgeführt wird.

Im Weiteren können die in Fig. 5 dargestellten Schritte des Verfahrens in Bezug auf die optionale zweite Nutzungsphase analog für die noch weitere bzw. vierte Nutzungsphase ausgeführt werden.

Weitere bevorzugte Ausführungsformen beziehen sich auf ein computerlesbares Speichermedium SM, umfassend Befehle, insbesondere in Form eines Computerprogramms PRG2, die bei der Ausführung durch einen Computer diesen veranlassen, das Verfahren 300 gemäß den Ausführungsformen auszuführen.

Bei weiteren bevorzugten Ausführungsformen ist vorgesehen, dass das Speichermedium die erste Speichereinrichtung 130 der Vorrichtung 100 umfasst oder Teil der ersten Speichereinrichtung 130 der Vorrichtung 100 ist, vgl. Fig. 1.

Weitere bevorzugte Ausführungsformen beziehen sich auf ein Computerprogramm PRG2, das computerlesbare Instruktionen umfasst, bei deren Ausführung durch einen Computer, insbesondere durch eine Recheneinrichtung 110 der Vorrichtung 100, das Verfahren 300 oder Schritte des Verfahrens 300 gemäß den Ausführungsformen abläuft.

Weitere bevorzugte Ausführungsformen beziehen sich auf eine Verwendung des Verfahrens 300 gemäß den Ausführungsformen und/oder der Vorrichtung 100 gemäß den Ausführungsformen und/oder des Computerprogramms PRG2 gemäß den Ausführungsformen zum Freigeben oder Nicht-Freigeben der Schnittstelle 120 der Vorrichtung 100 zum Übertragen eines durch die Vorrichtung 100 ausführbaren Computerprogramms PRG1, insbesondere zum Steuern einer Ausführung einer Prüfsoftware, insbesondere einer End-of-Line (EoL) Software in Abhängigkeit einer Zustandsvariable ZV der Vorrichtung 100, wobei ein Wert der Zustandsvariable ZV einer Nutzungsphase der Vorrichtung 100 zugeordnet ist.

Weitere bevorzugte Ausführungsformen beziehen sich auf eine Verwendung des Verfahrens 300 gemäß den Ausführungsformen und/oder der Vorrichtung 100 gemäß den Ausführungsformen und/oder des Computerprogramms PRG2 gemäß den Ausführungsformen zum Freigeben oder Nicht-Freigeben der Ausführung eines durch die Vorrichtung 100 ausführbaren, über die Schnittstelle 120 der Vorrichtung 100 übertragenen Computerprogramms PRG1.

In einer weiteren alternativen Ausgestaltung kann insbesondere zur Reaktivierung der in der weiteren Nutzungsphase bzw. Feldphase deaktivierten Schnittstelle 120 eine Authentisierung eines bestimmten Benutzers erforderlich sein. Dieser Benutzer kann sich beispielsweise über entsprechende Authentisierung wie eine SmartCard oder Ähnliches beispielsweise gegenüber einem Schlüsselverwaltungssystem (Key Management Server KMS) respektive der öffentlichen Schlüsselinfrastruktur (Public Key Infrastructure PKI) authentisieren. Dies erfolgt bevorzugt über eine weitere externe Einrichtung. Nach einer erfolgreichen Authentisierung kann beispielsweise die entsprechende Anfrage zur Reaktivierung der Schnittstelle 120 über die Diagnoseschnittstelle 150 gestellt werden. Falls zuvor sich der Benutzer jedoch nicht als autorisiert ausweisen konnte, wird eine solche Anfrage zur Reaktivierung der Schnittstelle 120 über die Diagnoseschnittstelle 150 nicht zugelassen. Die weitere Authentisierung zur Reaktivierung der Schnittstelle 120 läuft ab wie bereits oben beschrieben.

Das beschriebene Verfahren wird insbesondere zur sicheren und flexiblen Verwaltung von Steuergeräten (als Vorrichtung 100) für Kraftfahrzeuge in den unterschiedlichen Nutzungsphasen verwendet. Die Verwendung ist jedoch hierauf nicht eingeschränkt.

## Patentansprüche

1. Verfahren zum Betreiben einer Vorrichtung (100), wobei die Vorrichtung (100) ein Steuergerät eines Kraftfahrzeugs ist, wobei die Vorrichtung (100) zumindest eine Schnittstelle (120) zum Datenaustausch mit einer externen Einheit (200) aufweist und wenigstens eine erste Speichereinrichtung (130) zum nichtflüchtigen Speichern einer Zustandsvariable (ZV) umfasst, wobei das Verfahren (300) die folgenden Schritte umfasst:
Auswerten (310) der Zustandsvariable (ZV) und in Abhängigkeit des Auswertens (310) Freigeben (320) oder Nicht-Freigeben (330) einer Ausführung und/oder einer Übertragung wenigstens eines Computerprogramms (PRG1) zum Steuern einer Ausführung (360) einer Prüfsoftware, insbesondere einer End-of-Line (EoL) Software, von der externen Einheit (200) über die Schnittstelle (120), wobei ein Wert der Zustandsvariable (ZV) einer Nutzungsphase der Vorrichtung (100) zugeordnet ist, und wobei das Verfahren (300) den weiteren Schritt umfasst:
Ändern (380) des Werts der Zustandsvariable (ZV) in Abhängigkeit von einer Nutzungsphase der Vorrichtung (100) und/oder eines Übergangs von einer Nutzungsphase der Vorrichtung (100) in eine weitere Nutzungsphase der Vorrichtung (100), **dadurch gekennzeichnet, dass** ein Übertragen und Ausführen der Prüfsoftware
- während einer Produktionsphase als erste Nutzungsphase ohne Authentisieren freigegeben wird,
während einer Lagerphase und/oder einer Rückläuferphase/Analysephase als weitere Nutzungsphase nur nach Authentisieren freigegeben wird, und
- während einer Feldphase als dritte Nutzungsphase gar nicht möglich ist.

2. Verfahren nach Anspruch 1, wobei die Vorrichtung (100) wenigstens 3, insbesondere 4 oder 5, verschiedene Nutzungsphasen aufweist, wobei eine jeweilige Nutzungsphase insbesondere durch eine jeweilige Sicherheitsanforderung charakterisiert ist, und insbesondere wenigstens ein erster Wert der Zustandsvariable (ZV) der Produktionsphase zugeordnet ist, wobei die Produktionsphase der Vorrichtung (100) durch eine niedrige oder keine Sicherheitsanforderung charakterisiert ist und wenigstens ein weiterer, insbesondere ein dritter, Wert der Feldphase der Vorrichtung (100) zugeordnet ist, wobei die Feldphase der Vorrichtung (100) durch eine hohe Sicherheitsanforderung charakterisiert ist.

3. Verfahren nach wenigstens einem der vorhergehenden Ansprüche, wobei das Ändern des Werts der Zustandsvariable (ZV) inkrementell und/oder irreversibel erfolgt.

4. Verfahren nach wenigstens einem der vorhergehenden Ansprüche, wobei ein weiterer Wert der Zustandsvariablen (ZV) der Feldphase der Vorrichtung (100) zugeordnet ist, wobei die Schnittstelle (120) nicht verfügbar und/oder nicht reaktivierbar ist und/oder entsprechende Zugangspfade zu der Schnittstelle (120) insbesondere aus einem Bootloader gelöscht werden.

5. Verfahren nach einem der vorhergehenden Ansprüche, wobei die Vorrichtung (100) zumindest eine, insbesondere von der Schnittstelle (120) verschiedene, Diagnoseschnittstelle (150) aufweist, über die eine Reaktivierung der Schnittstelle (120) eingeleitet werden kann.

6. Verfahren nach wenigstens einem der vorhergehenden Ansprüche, wobei von einem Wechsel des ersten Werts der Zustandsvariable (ZV) unmittelbar in den weiteren Wert der Zustandsvariable (ZV) ohne einen Wechsel in den optionalen zweiten Wert der Zustandsvariablen (ZV) eine Änderung der Zustandsvariablen (ZV) in den optionalen zweiten Wert nicht mehr möglich ist.

7. Verfahren nach wenigstens einem der vorhergehenden Ansprüche, wobei das Verfahren weiter aufweist: Absichern (370), insbesondere kryptographisch, der Schnittstelle (120) der Vorrichtung (100).

8. Verfahren (300) nach wenigstens einem der vorhergehenden Ansprüche, wobei das Verfahren (300) weiter aufweist: Authentisieren (340) der externen Einheit (200) und/oder eines Benutzers der externen Einheit (200), wobei nach erfolgreichem Authentisieren (340) das Freigeben (320) der Übertragung des wenigstens einen Computerprogramms (PRG1) von der externen Einheit (200) über die Schnittstelle (120) in eine zweite Speichereinrichtung (140) erfolgt, und nach nicht erfolgreichem Authentisieren (340) das Nicht-Freigeben (330) der Übertragung des wenigstens einen Computerprogramms (PRG1) von der externen Einheit (200) über die Schnittstelle (120) in die zweite Speichereinrichtung (140) erfolgt.

9. Verfahren (300) nach einem der vorhergehenden Ansprüche, wobei das Authentisieren (340) in Abhängigkeit eines Werts der Zustandsvariable (ZV) ausgeführt wird, und insbesondere, wenn die Zustandsvariable (ZV) den weiteren, insbesondere dritten, oder den noch weiteren, insbesondere vierten, Wert aufweist, ausgeführt wird, und insbesondere, wenn die Zustandsvariable (ZV) den ersten Wert aufweist, nicht ausgeführt wird.

10. Verfahren (300) nach wenigstens einem der vorhergehenden Ansprüche, wobei das Verfahren weiter umfasst: Authentifizieren (350) des übertragenen Computerprogramms (PRG1), wobei nach erfolgreichem Authentifizieren (350) des übertragenen Computerprogramms (PRG1) das Ausführen (360a) des übertragenen Computerprogramms (PRG1) durch die Vorrichtung (100) erfolgt, und nach nicht erfolgreichem Authentifizieren (350) des Computerprogramms (PRG1) das Nicht-Ausführen (360b) des übertragenen Computerprogramms (PRG1) erfolgt.

11. Vorrichtung (100) mit einer Schnittstelle (120) zum Datenaustausch mit einer externen Einheit (200) und mit wenigstens einer ersten Speichereinrichtung (130) zum nichtflüchtigen Speichern einer Zustandsvariable (ZV) und mit wenigstens einer zweiten Speichereinrichtung (140) zum Speichern von wenigstens einem, insbesondere durch die Vorrichtung (100) ausführbaren Computerprogramm (PRG1), zum Steuern einer Ausführung (360) einer Prüfsoftware, insbesondere einer End-of-Line (EoL) Software, wobei die Vorrichtung (100) zum Ausführen des Verfahrens (300) nach wenigstens einem der vorhergehenden Ansprüche ausgebildet ist und wobei die Vorrichtung (100) ein Steuergerät eines Kraftfahrzeugs ist.

12. Vorrichtung (100) nach dem vorhergehenden Vorrichtungsanspruch, wobei die erste Speichereinrichtung (130) einen One Time Programmable (OTP) - Speicher umfasst oder Teil eines One Time Programmable (OTP) - Speicher ist und/oder die erste Speichereinrichtung (130) ein Hardware-Sicherheitsmodul (HSM), insbesondere ein Kryptographie-Modul, umfasst, oder Teil eines Hardware-Sicherheitsmodul (HSM), insbesondere eines Kryptographie-Modul, ist.

13. Computerlesbares Speichermedium (SM), umfassend Befehle, insbesondere in Form eines Computerprogramms (PRG2), die bei der Ausführung durch eine Recheneinrichtung (110) einer Vorrichtung (100) nach wenigstens einem der vorhergehenden Vorrichtungsansprüche, diese veranlassen, das Verfahren (300) nach wenigstens einem der vorhergehenden Verfahrensansprüche auszuführen.

14. Computerprogramm (PRG2), das computerlesbare Instruktionen umfasst, bei deren Ausführung durch eine Recheneinrichtung (110) einer Vorrichtung (100) nach Anspruch 11 oder 12 das Verfahren nach wenigstens einem der vorhergehenden Verfahrensansprüche abläuft.

## Claims

1. Method for operating an apparatus (100), wherein the apparatus (100) is a control unit of a motor vehicle, wherein the apparatus (100) has at least one interface (120) for exchanging data with an external unit (200) and comprises at least one first memory device (130) for the non-volatile storage of a state variable (ZV), wherein the method (300) comprises the following steps:
evaluating (310) the state variable (ZV) and, on the basis of the evaluation (310), enabling (320) or not enabling (330) execution and/or transmission of at least one computer program (PRG1) for controlling execution (360) of test software, in particular end-of-line (EoL) software, by the external unit (200) via the interface (120), wherein a value of the state variable (ZV) is assigned to a use phase of the apparatus (100), and wherein the method (300) comprises the further step of: changing (380) the value of the state variable (ZV) on the basis of a use phase of the apparatus (100) and/or a transition from a use phase of the apparatus (100) to a further use phase of the apparatus (100), **characterized in that** transmission and execution of the test software
- are enabled during a production phase as a first use phase without authentication,
are enabled during a storage phase and/or a return phase/analysis phase as a further use phase only after authentication, and
- are not possible at all during a field phase as a third use phase.

2. Method according to Claim 1, wherein the apparatus (100) has at least 3, in particular 4 or 5, different use phases, wherein a respective use phase is **characterized in** particular by a respective safety requirement, and in particular at least a first value of the state variable (ZV) is assigned to the production phase, wherein the production phase of the apparatus (100) is **characterized by** a low or no safety requirement, and at least one further, in particular a third, value is assigned to the field phase of the apparatus (100), wherein the field phase of the apparatus (100) is **characterized by** a high safety requirement.

3. Method according to at least one of the preceding claims, wherein the value of the state variable (ZV) is changed incrementally and/or irreversibly.

4. Method according to at least one of the preceding claims, wherein a further value of the state variable (ZV) is assigned to the field phase of the apparatus (100), wherein the interface (120) is not available and/or not reactivatable and/or corresponding access paths to the interface (120) are deleted, in particular from a boot loader.

5. Method according to one of the preceding claims, wherein the apparatus (100) has at least one diagnostic interface (150) which is different in particular from the interface (120) and via which a reactivation of the interface (120) can be initiated.

6. Method according to at least one of the preceding claims, wherein, from a change of the first value of the state variable (ZV) directly into the further value of the state variable (ZV) without a change into the optional second value of the state variable (ZV), it is no longer possible to change the state variable (ZV) into the optional second value.

7. Method according to at least one of the preceding claims, wherein the method further comprises: protecting (370), in particular cryptographically, the interface (120) of the apparatus (100).

8. Method (300) according to at least one of the preceding claims, wherein the method (300) further comprises: authenticating (340) the external unit (200) and/or a user of the external unit (200), wherein, after successful authentication (340), the transmission of the at least one computer program (PRG1) from the external unit (200) via the interface (120) to a second memory device (140) is enabled (320), and, after unsuccessful authentication (340), the transmission of the at least one computer program (PRG1) from the external unit (200) via the interface (120) to the second memory device (140) is not enabled (330).

9. Method (300) according to one of the preceding claims, wherein the authentication (340) is carried out on the basis of a value of the state variable (ZV), and is carried out in particular if the state variable (ZV) has the further, in particular third, or the still further, in particular fourth, value, and is not carried out in particular if the state variable (ZV) has the first value.

10. Method (300) according to at least one of the preceding claims, wherein the method further comprises: authenticating (350) the transmitted computer program (PRG1), wherein, after successful authentication (350) of the transmitted computer program (PRG1), the transmitted computer program (PRG1) is executed (360a) by the apparatus (100), and, after unsuccessful authentication (350) of the computer program (PRG1), the transmitted computer program (PRG1) is not executed (360b).

11. Apparatus (100) having an interface (120) for exchanging data with an external unit (200) and having at least one first memory device (130) for the non-volatile storage of a state variable (ZV) and having at least one second memory device (140) for storing at least one computer program (PRG1), in particular executable by the apparatus (100), for controlling execution (360) of test software, in particular end-of-line (EoL) software, wherein the apparatus (100) is designed to carry out the method (300) according to at least one of the preceding claims, and wherein the apparatus (100) is a control unit of a motor vehicle.

12. Apparatus (100) according to the preceding apparatus claim, wherein the first memory device (130) comprises a one time programmable (OTP) memory or is part of a one time programmable (OTP) memory and/or the first memory device (130) comprises a hardware security module (HSM), in particular a cryptographic module, or is part of a hardware security module (HSM), in particular a cryptographic module.

13. Computer-readable storage medium (SM), comprising instructions, in particular in the form of a computer program (PRG2), which, when executed by a computing device (110) of an apparatus (100) according to at least one of the preceding apparatus claims, cause said computing device to carry out the method (300) according to at least one of the preceding method claims.

14. Computer program (PRG2) comprising computer-readable instructions, during the execution of which by a computing device (110) of an apparatus (100) according to Claim 11 or 12, the method according to at least one of the preceding method claims takes place.

## Revendications

1. Procédé de mise en œuvre d'un dispositif (100), dans lequel le dispositif (100) est un appareil de commande d'un véhicule à moteur, le dispositif (100) comportant au moins une interface (120) permettant un échange de données avec une unité externe (200) et comprenant au moins un premier système de mémoire (130) servant à un stockage non volatil d'une variable d'état (ZV), le procédé (300) comprenant les étapes consistant à :
évaluer (310) la variable d'état (ZV) et, en fonction de l'évaluation (310), autoriser (320) ou ne pas autoriser (330) une exécution et/ou un transfert d'au moins un programme d'ordinateur (PRG1) pour commander l'exécution (360) d'un logiciel de test, en particulier d'un logiciel d'extrémité de ligne (EOL), à partir de l'unité externe (200) par l'intermédiaire de l'interface (120), une valeur de la variable d'état (ZV) étant associée à une phase d'utilisation du dispositif (100), et le procédé (300) comprenant l'étape supplémentaire consistant à : modifier (380) la valeur de la variable d'état (ZV) en fonction d'une phase d'utilisation du dispositif (100) et/ou d'une transition d'une phase d'utilisation du dispositif (100) à une autre phase d'utilisation du dispositif (100), **caractérisé en ce qu'**un transfert et une exécution du logiciel de test
- sont autorisés pendant une phase de production en tant que première phase d'utilisation sans authentification,
ne sont autorisés qu'après authentification pendant une phase de stockage et/ou une phase de retour/d'analyse en tant qu'autre phase d'utilisation, et
- ne sont pas possibles pendant une phase de terrain en tant que troisième phase d'utilisation.

2. Procédé selon la revendication 1, dans lequel le dispositif (100) comporte au moins 3, en particulier 4 ou 5 phases d'utilisation différentes, une phase d'utilisation respective étant caractérisée en particulier par une exigence de sécurité respective, et en particulier, au moins une première valeur de la variable d'état (ZV) étant associée à la phase de production, la phase de production du dispositif (100) étant **caractérisée par** une exigence de sécurité faible ou nulle et au moins une autre valeur, en particulier une troisième valeur, étant associée à la phase de terrain du dispositif (100), la phase de terrain du dispositif (100) étant **caractérisée par** une exigence de sécurité élevée.

3. Procédé selon au moins l'une des revendications précédentes, **caractérisé en ce que** la valeur de la variable d'état (ZV) est modifiée de manière incrémentielle et/ou de manière irréversible.

4. Procédé selon au moins l'une des revendications précédentes, dans lequel une autre valeur de la variable d'état (ZV) est associée à la phase de terrain du dispositif (100), l'interface (120) n'étant pas disponible et/ou ne pouvant pas être réactivée et/ou des voies d'accès à l'interface (120) correspondantes étant effacées, en particulier à partir d'un chargeur d'amorçage.

5. Procédé selon l'une des revendications précédentes, dans lequel le dispositif (100) comporte au moins une interface de diagnostic (150), en particulier différente de l'interface (120), par l'intermédiaire de laquelle une réactivation de l'interface (120) peut être déclenchée.

6. Procédé selon au moins l'une des revendications précédentes, dans lequel une modification des variables d'état (ZV) pour obtenir la deuxième valeur facultative n'est plus possible par une transformation de la première valeur de la variable d'état (ZV) directement en l'autre valeur de la variable d'état (ZV) sans une transformation en la deuxième valeur facultative de la variable d'état (ZV).

7. Procédé selon au moins l'une des revendications précédentes, le procédé consistant en outre à : sécuriser (370), en particulier de manière cryptographique, l'interface (120) du dispositif (100).

8. Procédé (300) selon au moins l'une des revendications précédentes, le procédé (300) consistant en outre à : authentifier (340) l'unité externe (200) et/ou un utilisateur de l'unité externe (200), dans lequel, après une authentification réussie (340), une autorisation (320) du transfert du ou des programmes d'ordinateur (PRG1) de l'unité externe (200) vers un deuxième système de mémoire (140) a lieu par l'intermédiaire de l'interface (120), et après une authentification non réussie (340), une non-autorisation (330) du transfert du ou des programmes d'ordinateur (PRG1) de l'unité externe (200) vers le deuxième système de mémoire (140) a lieu par l'intermédiaire de l'interface (120).

9. Procédé (300) selon l'une des revendications précédentes, dans lequel l'authentification (340) est effectuée sur la base d'une valeur de la variable d'état (ZV), et est en particulier effectuée lorsque la variable d'état (ZV) présente l'autre valeur, en particulier la troisième valeur, ou encore une autre valeur, en particulier la quatrième valeur, et n'est en particulier pas effectuée lorsque la variable d'état (ZV) présente la première valeur.

10. Procédé (300) selon au moins l'une des revendications précédentes, le procédé consistant en outre à : authentifier (350) le programme d'ordinateur (PRG1) transféré, dans lequel, après une authentification réussie (350) du programme d'ordinateur (PRG1) transféré, une exécution (360a) par le dispositif (100) du programme d'ordinateur (PRG1) transféré a lieu, et après une authentification non réussie (350) du programme d'ordinateur (PRG1) transféré, une non-exécution (360b) du programme d'ordinateur (PRG1) a lieu.

11. Dispositif (100) comportant une interface (120) permettant un échange de données avec une unité externe (200) et comprenant au moins un premier système de mémoire (130) servant au stockage non volatil d'une variable d'état (ZV) et au moins un deuxième système de mémoire (140) servant au stockage d'au moins un programme d'ordinateur (PRG1), en particulier exécutable par le dispositif (100), pour commander l'exécution (360) d'un logiciel de test, en particulier d'un logiciel d'extrémité de ligne (EOL), le dispositif (100) étant conçu pour mettre en œuvre le procédé (300) selon au moins l'une des revendications précédentes, et le dispositif (100) étant une unité de commande d'un véhicule à moteur.

12. Dispositif (100) selon la revendication de dispositif précédente, dans lequel le premier système de mémoire (130) comprend une mémoire programmable une fois (OTP) ou fait partie d'une mémoire programmable une fois (OTP) et/ou le premier système de mémoire (130) comprend un module de sécurité matériel (HSM), en particulier un module de cryptographie, ou fait partie d'un module de sécurité matériel (HSM), en particulier d'un module de cryptographie.

13. Support de stockage (SM) lisible par ordinateur comprenant des instructions, en particulier sous la forme d'un programme d'ordinateur (PRG2), qui, lorsqu'elles sont exécutées par un système informatique (110) d'un dispositif (100) selon au moins l'une des revendications de dispositif précédentes, amènent ce dernier à mettre en œuvre le procédé (300) selon au moins l'une des revendications de procédé précédentes.

14. Programme d'ordinateur (PRG2) comprenant des instructions lisibles par ordinateur dont l'exécution par un système informatique (110) d'un dispositif (100) selon la revendication 11 ou 12 met en œuvre le procédé selon au moins l'une des revendications de procédé précédentes.
